# EUROPÄISCHE PATENTSCHRIFT

(11) **EP 2 110 649 B1**
(45) Veröffentlichungstag und Bekanntmachung des Hinweises auf die Patenterteilung: **03.11.2010**
(21) Anmeldenummer: 08007267.1
(22) Anmeldetag: 14.04.2008
(51) Int. Cl.: G01H 13/00

(54) **Sensor für die Zustandsüberwachung von mechanischen Bauteilen**
Sensor for surveying mechanical construction parts
Capteur pour surveiller des éléments mécaniques de construction

(43) Veröffentlichungstag der Anmeldung: 21.10.2009
(73) Patentinhaber: SIEMENS AKTIENGESELLSCHAFT, 80333 München (DE)
(72) Erfinder: Müller, Klaus-Dieter Dr., 90425 Nürnberg (DE); Scheibner, Dirk Dr., 90473 Nürnberg (DE)

(56) Entgegenhaltungen:
- GB-A- 2 156 520
- US-A- 5 618 993
- US-A- 5 942 690
- US-A1- 2004 009 065
- US-A1- 2008 028 860

## Beschreibung

Für eine Zustands- und Verschleißüberwachung von mechanischen Bauteilen stellt eine Analyse des Schwingungsverhaltens eines zu überwachenden Bauteils eine wichtige Grundlage dar. Auch bei einer Qualitätsüberwachung und -endkontrolle zur Erkennung fehlerhafter Zustände und Prozesse werden Schwingungsanalyseverfahren angewendet.

Zur Schwingungsüberwachung werden beispielsweise piezoelektrische Aufnehmer mit breitbandiger Charakteristik verwendet und erfaßte Meßsignale entweder im Zeitbereich mittels Kennwertbildung oder im Frequenzbereich analysiert. Analysen im Frequenzbereich sind jedoch sehr rechenaufwendig und erfordern mitunter teuere Hardware und Software. Einen verhältnismäßig kostengünstigen Sensoraufbau ermöglichen breitbandige mikromechanische Beschleunigungssensoren, die mittlerweile in großen Stückzahlen von zahlreichen Herstellern verfügbar und für Auswertungen im Frequenzbereich mittels Fourier-Transformation in elektrische Schaltkreise mit digitalen Signalprozessoren integrierbar sind.

Zur Überwachung von Schwingungen, die durch Resonanzanregungen beispielsweise bei rotierenden Teilen entstehen, werden Acoustic Emission Signale registriert, deren Frequenzspektrum im Ultraschallbereich liegt. Im Gegensatz zu Signalen im durch Menschen hörbaren Frequenzspektrum erlauben Signale im Ultraschallbereich eine Erkennung einer momentanen aktiven Schädigung eines zu überwachenden Prüflings im wesentlichen unabhängig von dessen gegenwärtigem Zustand.

Eine Auswertung von Resonanzanregungen, deren Frequenzspektrum sich hauptsächlich auf den hörbaren Frequenzbereich erstreckt, ermöglicht Aussagen über einen Zustand eines Prüflings, also beispielsweise über bereits bestehende Schädigungen. Üblicherweise erfolgen derartige Auswertungen mittels Fourier-Analyse.

In vielen Anwendungsfällen sind Informationen über einen Grad einer bestehenden Schädigung und Informationen über fortschreitende Schädigungen von Interesse. Beispielsweise ein Lager mit einem Pittingschaden noch jahrelang in einem Motor weiter betrieben werden, ohne daß es zu einem Ausfall kommt, sofern ausgebrochene Partikel sich in einer Schmierung des Lagers absetzen und keine weitere Schädigung hervorrufen.

Der vorliegenden Erfindung liegt daher die Aufgabe zugrunde, einen Sensor zu schaffen, der eine zuverlässige Vorhersage von drohenden Bauteileausfällen ermöglicht.

Diese Aufgabe wird erfindungsgemäß durch einen Sensor mit den in Anspruch 1 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung liegt darin, daß ein Sensor ein erstes mechanisch schwingfähiges System, dessen Resonanzfrequenz im Ultraschallbereich liegt und an eine materialspezifische Resonanzfrequenz eines zu überwachenden Prüflings angepaßt ist, und ein zweites mechanisch schwingfähiges System umfaßt, dessen Resonanzfrequenz in einem hörbaren Frequenzbereich liegt. Außerdem ist eine mit dem ersten schwingfähigen System gekoppelte erste Signalverarbeitungseinheit zur Erfassung einer Schadensproliferation des zu überwachenden Prüflings vorgesehen. Das zweite schwingfähige System ist mit einer zweiten Signalverarbeitungseinheit zur Erfassung von eine bestehende Schädigung anzeigenden Schwingungsfrequenzen des zu überwachenden Prüflings gekoppelt. Mit der ersten und der zweiten Signalverarbeitungseinheit ist eine Auswertungseinheit zur Ermittlung eines Diagnoseergebnisses verbunden.

Vorzugsweise sind das erste und das zweite mechanisch schwingfähige System gemeinsam als mikromechanische Sensoreinheiten auf ein Substrat aufgebracht. Das erste bzw. zweite mechanisch schwingfähige System können als piezoelektrische Sensoreinheiten, als piezoresistive Sensoreinheiten, als kapazitive Sensoreinheiten oder als induktive Sensoreinheiten realisiert sein.

Entsprechend einer bevorzugten Ausführungsform der vorliegenden Erfindung sind die die erste und zweite Signalverarbeitungseinheit und die Auswertungseinheit in einem integrierten elektrischen Schaltkreis zusammengefaßt. In entsprechender Weise können das erste und zweite mechanisch schwingfähige System in einem integrierten elektrischen Schaltkreis zusammengefaßt sein. Auf diese weise ist eine kostengünstige Fertigung eines zuverlässigen Sensors möglich.

Die erste Signalverarbeitungseinheit kann darüber hinaus einen Bandpaßfilter für ein durch das erste mechanisch schwingfähige System erzeugtes Meßsignal umfassen. Hierdurch lassen sich Störsignale aus nichtuntersuchungsrelevanten Frequenzbereichen eliminieren.

Die Erfindung wird nachfolgend an einem Ausführungsbeispiel anhand der Zeichnung näher erläutert. Es zeigt
- Figur 1: ein Prinzipschaltbild eines erfindungsgemäßen Sen- sors und
- Figur 2: eine Darstellung eines mikromechanischen Kombinati- onssensors und einer integrierten Signalverarbei- tungs-/Auswertungseinheit zur Realisierung eines Sensors gemäß Figur 1,

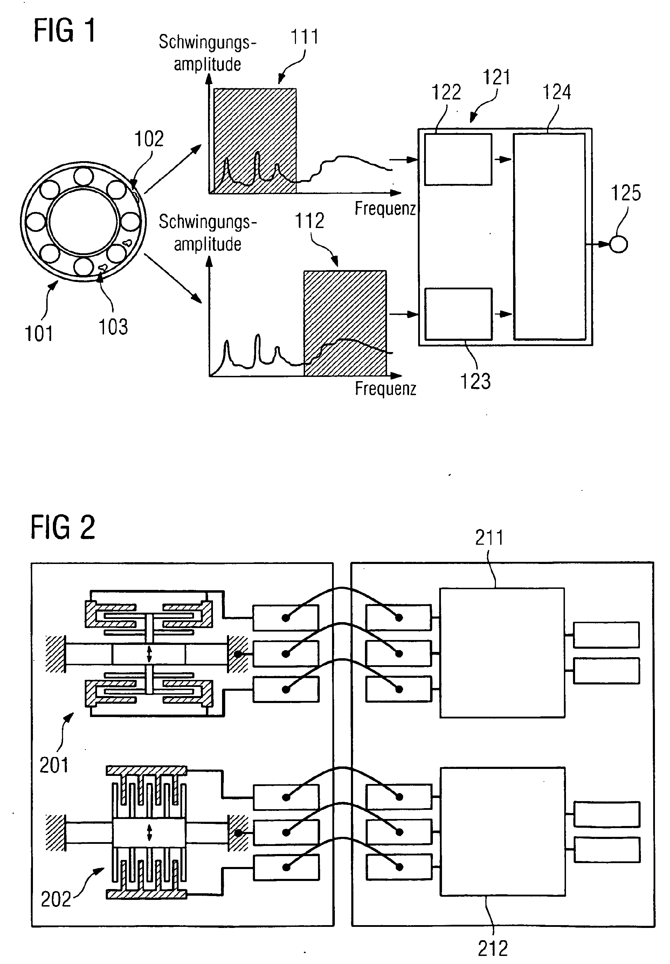

Der in Figur 1 dargestellte Sensor 121 umfaßt einen Schwingungssensor 122, dessen Resonanzfrequenz in einem hörbaren Frequenzbereich liegt. Außerdem weist der Sensor 121 einen Körperschallsensor 123 auf, dessen Resonanzfrequenz im Ultraschallbereich 112 liegt und an eine materialspezifische Resonanzfrequenz eines zu überwachenden Prüflings 101 angepaßt eist. Im vorliegenden Ausführungsbeispiel handelt es sich bei dem zu überwachen Prüfling 101 um ein Wälzlager. Ausgangssignale des Schwingungssensors 122 rund des Körperschallsensors 123 werden in einer kombinierten Signalverarbeitungs-/Auswertungseinheit 124 einzeln verstärkt und mittels Hüllkurvendetektion vorverarbeitet. In der Signalverarbeitungs-/Auswertungseinheit 124 erfolgt wird anhand einer Kombination aufbereiteter Meßsignale des Schwingungssensors 122 und des Körperschallsensors 123 eine Zustandsbewertung für das zu überwachende Wälzlager 101.

Der Schwingungssensor 122 und der Körperschallsensor 123 sind jeweils durch mechanisch schwingfähige Systeme realisiert, beispielsweise durch piezoelektrische oder piezoresistive Sensoreinheiten. Die Sensoreinheiten können entweder einzeln gefertigt oder gemeinsam auf ein Substrat integriert sein.

Die Signalverarbeitungs-/Auswertungseinheit 124 ist sowohl mit dem Schwingungssensor 122 als auch mit dem Körperschallsensor 123 gekoppelt und erfaßt einerseits eine Schadensproliferation des zu überwachenden Wälzlagers 101 und andererseits eine bestehende Schädigung anzeigende Schwingungsfrequenzen des zu überwachenden Wälzlagers 101. Bestehende Schädigungen können beispielsweise ein Partikel 103 im Wälzlager 101 oder eine Schädigung 102 einer Lagerlauffläche sein. An einem Ausgang 125 der Signalverarbeitungs-/Auswertungseinheit 124 wird ein Ausgangssignal bereitgestellt, das ein Diagnoseergebnis repäsentiert.

Vorzugsweise weist die Signalverarbeitungs-/Auswertungseinheit 124 Mittel zur Ermittlung eines Diagnosekennwerts aus einem Maximalwert und aus einem Effektivwert eines Meßsignals des Schwingungssensors 122 sowie Mittel zur Spektralanalyse eines Meßsignals des Körperschallsensors 123 auf. Darüber hinaus umfaßt die Signalverarbeitungs-/Auswertungseinheit 124 Mittel zur Erzeugung eines einen störungsfreien Zustand des zu überwachenden Wälzlagers 101 anzeigenden Signals bei geringem Diagnosekennwert und verschwindendem Frequenzspektrum. Bei geringem Diagnosekennwert und vorhandenem Frequenzspektrum wird ein einen beginnenden Schaden am zu überwachenden Wälzlager 101 anzeigendes Signal erzeugt, während bei hohem Diagnosekennwert und vorhandenem Frequenzspektrum ein Signal zur Anzeige eines fortschreitenden Schadens generiert wird. Die Signalverarbeitungs-/Auswertungseinheit 124 erzeugt bei hohem Diagnosekennwert und weiter zunehmendem oder wieder abnehmendem Frequenzspektrum ein Signal, das eine bevorstehende Funktionsunfähigkeit des zu überwachenden Wälzlagers 101 anzeigt.

Der Schwingungssensor 122 ist im vorliegenden Ausführungsbeispiel zur Messung von Schwingungen unterhalb des Ultraschallbereichs bis 30 kHz ausgelegt und kann Resonanzen ermitteln oder in einem linearen Bereich unterhalb seiner Resonanzfrequenz messen. Ein typischer Frequenzbereich für den Schwingungssensor 122 reicht von 8kHz bis 18kHz.

Der Frequenzbereich des Körperschallsensors 123 liegt im vorliegenden Ausführungsbeispiel bei einem zwei Metallringe umfassenden Wälzlager 101 bei 105 bis 115 kHz: Applikationsspezifisch kann die Resonanzfrequenz in einem Frequenzbereich von etwa 30 kHz bis einigen hundert kHz variiert werden.

Die Ausgangssignale des Körperschallsensors 123 durchlaufen vorteilhafterweise einen in die Signälverarbeitungs-/Auswertungseinheit 124 integrierten Bandpaß, der einer Eliminierung von Störungen aus anderen Frequenzbereichen dient. Als Auswerteverfahren für die vom Schwingungssensor 122 bzw. Körperschallsensor 123 erfaßten Meßsignale dienen beispielsweise die Hüllkurven- und/oder Fast-Fourier-Analyse. Abschließend erfolgt eine Bewertung beider ausgewerteter Meßsignale abhängig von Kundenanforderungen.

In Figur 2 ist eine mögliche physikalische Struktur des Sensors 121 gemäß Figur 1 dargestellt. Die mit Technologien der Mikrosystemtechnik realisierte Sensorstruktur umfaßt einen als Acoustic-Emission-Sensor 202 und ein als Schwingungssensor einsetzbares schwingfähiges Feder-Masse-System 201, die als mikromechanische Komponenten realisiert sind. Schwingfähige Systeme können ihren Meßbereich entweder unterhalb der Resonanzfrequenz oder direkt im Bereich ihrer Resonanzstelle besitzen. Entsprechend der in Figur 2 dargestellten Sensorstruktur erfolgt eine Signalgewinnung kapazitiv. Als Alternative hierzu kann die Signalgewinnung auch durch einen integrierten Sensor piezoresisitiv, induktiv oder piezoelektrisch realisiert werden. Die mikromechanischen Komponenten sind mit jeweils einer kombinierten Signalverarbeitungs-/Auswertungseinheit 211, 212 verbunden, welche Signalgewinnung und analoge Vorverarbeitung wie oben beschrieben ermöglicht.

Durch eine gleichzeitige Messung und Auswertung von Signale im hörbaren Frequenzbereich und im Ultraschallbereich wird eine deutlich exaktere Prognose eines bevorstehenden Ausfalls eines zu überwachenden Bauteils erzielt. Außerdem wird eine längere Nutzbarkeit des Bauteils ohne Entstehung von Ausfall- und Ausfallfolgekosten ermöglicht. Durch Verwendung von Technologien der Mikrosystemtechnik zur Herstellung eines oben beschriebenen Sensors entstehen kleine und preisgünstige Systeme zur Zustandsüberwachung, die weitergehende Einssatzmöglichkeiten als bestehende Lösungen auf Basis piezoelektrischer Sensoren bieten.

Die Anwendung der vorliegenden Erfindung ist nicht auf das beschriebene Ausführungsbeispiel beschränkt.

## Patentansprüche

1. Sensor mit
- einem ersten mechanisch schwingfähigen System, dessen Resonanzfrequenz im Ultraschallbereich liegt und an eine materialspezifische Resonanzfrequenz eines zu überwachenden Prüflings angepaßt ist,
- einem zweiten mechanisch schwingfähigen System, dessen Resonanzfrequenz in einem hörbaren Frequenzbereich liegt,
- einer mit dem ersten System gekoppelten ersten Signalverarbeitungseinheit zur Erfassung einer Schadensproliferation des zu überwachenden Prüflings,
- einer mit dem zweiten System gekoppelten zweiten Signalverarbeitungseinheit zur Erfassung von eine bestehende Schädigung anzeigenden Schwingungsfrequenzen des zu überwachenden Prüflings,
- einer mit der ersten und der zweiten Signalverarbeitungseinheit verbundenen Auswertungseinheit zur Ermittlung eines Diagnoseergebnisses.

2. Sensor nach Anspruch 1,
bei dem die erste Signalverarbeitungseinheit zumindest ein Mittel zur Ermittlung eines Diagnosekennwerts aus einem Maximalwert und aus einem Effektivwert eines Meßsignals des ersten mechanisch schwingfähigen Systems umfaßt.

3. Sensor nach Anspruch 2,
bei dem die zweite Signalverarbeitungseinheit zumindest ein Mittel zur Spektralanalyse eines Meßsignals des zweiten mechanisch schwingfähigen Systems umfaßt.

4. Sensor nach Anspruch 3,
bei dem die Auswertungseinheit zumindest ein Mittel zur Erzeugung eines einen störungsfreien Zustand des zu überwachenden Prüflings anzeigenden Signals bei geringem Diagnosekennwert und verschwindendem Frequenzspektrum umfaßt.

5. Sensor nach einem der Ansprüche 3 oder 4,
bei dem die Auswertungseinheit zumindest ein Mittel zur Erzeugung eines einen beginnenden Schaden am zu überwachenden Prüfling anzeigenden Signals bei geringem Diagnosekennwert und vorhandenem Frequenzspektrum aufweist.

6. Sensor nach einem der Ansprüche 3 bis 5,
bei dem die Auswertungseinheit zumindest ein Mittel zur Erzeugung eines einen fortschreitenden Schaden am zu überwachenden Prüfling anzeigenden Signals bei hohem Diagnosekennwert und vorhandenem Frequenzspektrum aufweist.

7. Sensor nach einem der Ansprüche 3 bis 6,
bei dem die Auswertungseinheit zumindest ein Mittel zur Erzeugung eines eine bevorstehende Funktionsunfähigkeit des zu überwachenden Prüflings anzeigenden Signals bei hohem Diagnosekennwert und weiter zunehmendem oder wieder abnehmendem Frequenzspektrum aufweist.

8. Sensor nach einem der Ansprüche 1 bis 7,
bei dem das erste und das zweite mechanisch schwingfähige System gemeinsam als mikromechanische Sensoreinheiten auf ein Substrat aufgebracht sind.

9. Sensor nach einem der Ansprüche 1 bis 8,
bei dem das erste und/oder zweite mechanisch schwingfähige System als piezoelektrische Serisoreinheiten realisiert sind.

10. Sensor nach einem der Ansprüche 1 bis 8,
bei dem das erste und/oder zweite mechanisch schwingfähige System als piezoresistive Sensoreinheiten realisiert sind.

11. Sensor nach einem der Ansprüche 1 bis 8,
bei dem das erste und/oder zweite mechanisch schwingfähige System als kapazitive Sensoreinheiten realisiert sind.

12. Sensor nach einem der Ansprüche 1 bis 8,
bei dem das erste und/oder zweite mechanisch schwingfähige System als induktive Sensoreinheiten realisiert sind.

13. Sensor nach einem der Ansprüche 1 bis 12,
bei dem die erste und zweite Signalverarbeitungseinheit und die Auswertungseinheit in einem integrierten elektrischen Schaltkreis zusammengefaßt sind.

14. Sensor nach einem der Ansprüche 1 bis 13,
bei dem das erste und zweite mechanisch schwingfähige System in einem integrierten elektrischen Schaltkreis zusammengefaßt sind.

15. Sensor nach einem der Ansprüche 1 bis 14,
bei dem die erste Signalverarbeitungseinheit einen Bandpaßfilter für ein durch das erste mechanisch schwingfähige System erzeugtes Meßsignal umfaßt.

## Claims

1. Sensor having
- a first system which is capable of mechanical oscillation and whose resonant frequency is in the ultrasonic range and is matched to a material-specific resonant frequency of a test object to be monitored,
- a second system which is capable of mechanical oscillation and whose resonant frequency is in an audible frequency range,
- a first signal processing unit which is coupled to the first system and is intended to detect damage proliferation of the test object to be monitored,
- a second signal processing unit which is coupled to the second system and is intended to detect oscillation frequencies of the test object to be monitored which indicate existing damage,
- an evaluation unit which is connected to the first and second signal processing units and is intended to determine a diagnostic result.

2. Sensor according to Claim 1,
in which the first signal processing unit comprises at least one means for determining a diagnostic characteristic value from a maximum value and from a root mean square value of a measurement signal from the first system which is capable of mechanical oscillation.

3. Sensor according to Claim 2,
in which the second signal processing unit comprises at least one means for the spectral analysis of a measurement signal from the second system which is capable of mechanical oscillation.

4. Sensor according to Claim 3,
in which the evaluation unit comprises at least one means for generating a signal which indicates a fault-free state of the test object to be monitored in the case of a small diagnostic characteristic value and a vanishing frequency spectrum.

5. Sensor according to either of Claims 3 and 4,
in which the evaluation unit has at least one means for generating a signal which indicates incipient damage to the test object to be monitored in the case of a small diagnostic characteristic value and an available frequency spectrum.

6. Sensor according to one of Claims 3 to 5,
in which the evaluation unit has at least one means for generating a signal which indicates progressive damage to the test object to be monitored in the case of a large diagnostic characteristic value and an available frequency spectrum.

7. Sensor according to one of Claims 3 to 6,
in which the evaluation unit has at least one means for generating a signal which indicates imminent functional incapacity of the test object to be monitored in the case of a large diagnostic characteristic value and a frequency spectrum which increases further or decreases again.

8. Sensor according to one of Claims 1 to 7,
in which the first and second systems which are capable of mechanical oscillation are applied together to a substrate in the form of micromechanical sensor units.

9. Sensor according to one of Claims 1 to 8,
in which the first and/or second system(s) which is/are capable of mechanical oscillation is/are in the form of (a) piezoelectric sensor unit(s).

10. Sensor according to one of Claims 1 to 8,
in which the first and/or second system(s) which is/are capable of mechanical oscillation is/are in the form of (a) piezoresistive sensor unit(s).

11. Sensor according to one of Claims 1 to 8,
in which the first and/or second system(s) which is/are capable of mechanical oscillation is/are in the form of (a) capacitive sensor unit(s).

12. Sensor according to one of Claims 1 to 8,
in which the first and/or second system(s) which is/are capable of mechanical oscillation is/are in the form of (an) inductive sensor unit(s).

13. Sensor according to one of Claims 1 to 12,
in which the first and second signal processing units and the evaluation unit are combined in an integrated electrical circuit.

14. Sensor according to one of Claims 1 to 13,
in which the first and second systems which are capable of mechanical oscillation are combined in an integrated electrical circuit.

15. Sensor according to one of Claims 1 to 14,
in which the first signal processing unit comprises a bandpass filter for a measurement signal generated by the first system which is capable of mechanical oscillation.

## Revendications

1. Capteur comprenant
- un premier système apte à osciller mécaniquement, dont la fréquence de résonance se trouve dans le domaine des ultrasons et est adaptée à une fréquence de résonance spécifique à une éprouvette à contrôler,
- un deuxième système apte à osciller mécaniquement, dont la fréquence de résonance est dans un domaine de fréquence audible,
- une première unité de traitement du signal, qui est couplée au premier système et qui est destinée à détecter une prolifération de dommages de l'éprouvette à contrôler,
- une deuxième unité de traitement du signal, qui est couplée au deuxième système et qui est destinée à détecter des fréquences d'oscillation indiquant un endommagement présent de l'éprouvette à contrôler,
- une unité d'exploitation, qui est reliée à la première et la deuxième unités de traitement du signal et qui est destinée à la détermination d'un résultat de diagnostic.

2. Capteur suivant la revendication 1,
dans lequel la première unité de traitement du signal comprend au moins un moyen de détermination d'une valeur caractéristique de diagnostic, à partir d'une valeur maximum et d'une valeur efficace d'un signal de mesure du premier système apte à osciller mécaniquement.

3. Capteur suivant la revendication 2,
dans lequel la deuxième unité de traitement du signal comprend au moins un moyen d'analyse spectrale d'un signal de mesure du deuxième système apte à osciller mécaniquement.

4. Capteur suivant la revendication 3,
dans lequel l'unité d'exploitation comprend, lorsque la valeur caractéristique de diagnostic est petite et lorsque le spectre de fréquence disparaît, au moins un moyen de production d'un signal indiquant un état sans perturbation de l'éprouvette à contrôler.

5. Capteur suivant l'une des revendications 3 à 4,
dans lequel l'unité d'exploitation comporte, lorsque la valeur caractéristique de diagnostic est petite et lorsqu'un spectre de fréquence est présent, au moins un moyen de production d'un signal indiquant un début de dommage sur l'éprouvette à contrôler.

6. Capteur suivant l'une des revendications 3 à 5,
dans lequel l'unité d'exploitation comporte, lorsque la valeur caractéristique de diagnostic est grande et lorsqu'un spectre de fréquence est présent, au moins un moyen de production d'un signal indiquant qu'un dommage progresse sur l'éprouvette à contrôler.

7. Capteur suivant l'une des revendications 3 à 6,
dans lequel l'unité d'exploitation comprend, lorsqu'une valeur caractéristique de diagnostic est grande et lorsqu'un spectre de fréquence continue à augmenter ou à diminuer, au moins un moyen de production d'un signal indiquant une inaptitude à fonctionner sur le point de se produire de l'éprouvette à contrôler.

8. Capteur suivant l'une des revendications 1 à 7,
dans lequel le premier et le deuxième systèmes aptes à osciller mécaniquement sont déposés en commun sous la forme d'unités de capteur micromécaniques sur un substrat.

9. Capteur suivant l'une des revendications 1 à 8,
dans lequel le premier et/ou le deuxième systèmes aptes à osciller mécaniquement sont réalisés sous la forme d'unités de capteur piézoélectriques.

10. Capteur suivant l'une des revendications 1 à 8,
dans lequel le premier et/ou le deuxième systèmes aptes à osciller mécaniquement sont réalisés sous la forme d'une unité de capteur piézorésistive.

11. Capteur suivant l'une des revendications 1 à 8,
dans lequel le premier et/ou le deuxième systèmes apte à osciller mécaniquement sont réalisés sous la forme d'une unité de capteur capacitive.

12. Capteur suivant l'une des revendications 1 à 8,
dans lequel le premier et/ou le deuxième systèmes aptes à osciller mécaniquement sont réalisés sous la forme d'une unité de capteur inductive.

13. Capteur suivant l'une des revendications 1 à 12,
dans lequel la première et la deuxième unités de traitement du signal et l'unité d'exploitation sont rassemblées dans un circuit électrique intégré.

14. Capteur suivant l'une des revendications 1 à 13,
dans lequel le premier et le deuxième systèmes aptes à osciller mécaniquement sont rassemblés dans un circuit électrique intégré.

15. Capteur suivant l'une des revendications 1 à 14,
dans lequel la première unité de traitement du signal comprend un filtre passe-bande, pour un signal de mesure produit par le premier système apte à osciller mécaniquement.
